# EUROPÄISCHE PATENTSCHRIFT

(11) **EP 1 564 471 B1**
(45) Veröffentlichungstag und Bekanntmachung des Hinweises auf die Patenterteilung: **03.01.2007**
(21) Anmeldenummer: 05001577.5
(22) Anmeldetag: 26.01.2005
(51) Int. Cl.: F16L 33/08

(54) **Verbindung einer Schelle mit einem Schlauch**
Connection of a clamp to a hose
Raccordement d'un collier avec un tuyau

(30) Priorität: 11.02.2004 DE 102004006658
(43) Veröffentlichungstag der Anmeldung: 17.08.2005
(73) Patentinhaber: Rasmussen GmbH, 63477 Maintal (DE)
(72) Erfinder: Geppert, Helmut, 63791 Karlstein (DE); Krauss, Mathias, 63477 Maintal (DE)
(74) Vertreter: Knoblauch, Andreas

(56) Entgegenhaltungen:
- DE-A1- 19 501 615
- DE-A1- 19 533 553
- US-A- 2 433 602

## Beschreibung

Die Erfindung bezieht sich auf eine Verbindung einer Schelle mit einem Schlauch, bei der ein Schellenband der Schelle zwischen radialen, hakenförmigen Vorsprüngen arretiert ist, die mit dem Schlauch in Verbindung stehen und die Ränder des Schellenbands übergreifen.

Diese Verbindung dient zur Vormontage der Schelle auf einem Schlauchende.

Bei einer aus DE 19 501 615 A bekannten gattungsbildenden Verbindung sind zwei hakenförmige Vorsprünge jeweils an einem umlaufenden Wulst des Schlauches, sich gegenüberliegend, angeformt. Wegen dieser einstückigen Ausbildung von Schlauch, Wülsten und Vorsprüngen ist für jeden Schlauchdurchmesser und jede Schlauchlänge ein eigenes Formwerkzeug erforderlich. Dies ist aufwendig.

Es ist ferner bekannt (US 2 433 602), den Ring aus Gummi mit etwa halbkreisförmigem Querschnitt und einer außen umlaufenden Nut herzustellen, in der ein federnder C-Ring zum Festklemmen des Gummiringes auf einem Schlauchende eingelegt ist. Der Gummiring ist wesentlich dicker als die Wandstärke des Schlauches. Er läßt sich daher nur unter erheblichem Kraftaufwand zusammen mit dem Schlauch über eine Halterippe eines Rohrstutzens hinweg auf den Rohrstutzen schieben, um den Schlauch mittels des Federrings auf dem Rohrstutzen festzuklemmen. Sein Verhalten bei Temperaturänderungen sowie der durch den Federring und Innendruck bedingten Belastung beeinflußt ferner das Gesamtverhalten von Schlauch, Gummi- und Federring erheblich. Der Federring kann nicht jede durch seinen Druck und thermisch bedingte Dickenänderung des Gummirings und des Schlauches ausgleichen.

Der Erfindung liegt die Aufgabe zugrunde, eine Verbindung der eingangs erwähnten Art anzugeben, die einfacher herstellbar und weitgehend unabhängig von Dickenänderungen des Schlauches ist.

Erfindungsgemäß ist diese Aufgabe dadurch gelöst, daß die Vorsprünge an den Rändern eines gummielastischen Ringes ausgebildet sind, der den Schlauch unterhalb des Schellenbandes unter elastischer Vorspannung lösbar umgibt, und daß die Dicke des Ringes in seinem axial zwischen den Vorsprüngen liegenden Bereich 5 % bis 9 % der Wandstärke des Schlauches beträgt.

Bei dieser Ausbildung können der Schlauch und der gummielastische Ring separat hergestellt werden. Für Schläuche unterschiedlicher Länge, aber gleichem Durchmesser und gleicher Wandstärke ist nur ein Formwerkzeug erforderlich, mit dem ein relativ langer Schlauch herstellbar ist. Von diesem Schlauch können dann unterschiedlich lange Schläuche abgeschnitten werden. Für solche Schläuche (auch solche mit etwas unterschiedlichen Durchmessern) kommt man mit den gleichen gummielastischen Ringen aus, für deren Herstellung ebenfalls nur ein Formwerkzeug erforderlich ist. Da der gummielastische Ring im Vergleich zur Wandstärke des Schlauches relativ dünn ist, beeinflußt er nicht nur das Gesamtverhalten von Schlauch und Ring kaum, sondern er läßt sich auch leicht auf dem Schlauch aufbringen und zusammen mit dem Schlauch und der ungespannten vormontierten Schelle auf einen Rohrstutzen über eine Halterippe des Stutzens hinweg aufschieben.

Vorzugsweise ist dafür gesorgt, daß die Schelle einen Verschluß zum Spannen des Schellenbands aufweist und vor und hinter dem Verschluß jeweils zwei sich gegenüberliegende hakenförmige Vorsprünge an den Rändern des Ringes angeformt sind, die die Ränder des Schellenbands übergreifen. Diese beiden Vorsprungpaare verhindern eine Verschiebung des Verschlusses bei und vor dem Spannen der Schelle.

Außerdem können zwei weitere, sich gegenüberliegende hakenförmige Vorsprünge jeweils an einem der Ränder des Ringes angeformt sein, die die Ränder des Schellenbands übergreifen und von der Mitte der beiden vor und hinter dem Verschluß liegenden Vorsprungpaare in beiden Umfangsrichtungen der Schelle jeweils bis zur Mitte des dritten Vorsprungpaares einen Winkelabstand von mehr als 90° aufweisen. Dieses zusätzliche Vorsprungpaar verhindert eine Schrägstellung des Schellenbandes beim Spannen, wenn der Verschluß beim Spannen in Axialrichtung mit der Hand festgehalten und dabei oder mittels eines Schraubendrehers in Axialrichtung der Schelle belastet wird, mittels des Schraubendrehers z.B. durch eine Axialkomponente beim Festziehen einer Spannschraube des Verschlusses, an der der Schraubendreher versehentlich schräg angesetzt wird.

Sodann kann der Winkelabstand in der einen Umfangsrichtung der Schelle zwischen 140° und 170° liegen. In der anderen Umfangsrichtung liegt der Winkelabstand dann im Bereich von 190° bis 220°. Dieser Bereich läßt hinreichend Platz für die Anordnung einer Feder zwischen Schelle und gummielastischem Ring zum Ausgleichen einer thermisch und druckbedingten Dickenänderung der Wandstärke des Schlauches frei. Eine derartige Feder ist beispielsweise aus der DE 41 27 017 Cl bekannt.

Vorzugsweise ist ferner dafür gesorgt, daß der Ring an jedem Rand zwischen den Vorsprüngen umlaufende Wülste aufweist, deren Querschnitt radial außen jeweils in entgegengesetzten Axialrichtungen des Ringes nach außen und radial nach außen zunimmt. Zur Ausbildung dieser Wülste ist wenig Material erforderlich. Die Wülste werden nicht durch die Schelle unter Druck gesetzt und behalten daher ihre Form weitgehend unabhängig vom Einspanndruck der Schelle bei. Gleichzeitig verhindern sie zusätzlich zu den hakenförmigen Vorsprüngen eine Axialverschiebung der Schelle auf dem gummielastischen Ring.

Ferner kann der Querschnitt der Wülste radial innen jeweils in entgegengesetzten Axialrichtungen des Ringes nach außen und radial nach innen zunehmen. Diese nach innen in Bezug auf den Ring vorstehenden Teile der Wülste bewirken beim Spannen der Schelle, daß sich die beiden hakenförmigen Vorsprünge jedes Vorsprungpaares zueinander hin neigen und das Schellenband um so fester übergreifen.

Sodann kann dafür gesorgt sein, daß die Vorsprünge die Schellenbandränder mit Nasen übergreifen, deren Querschnitt zu dem jeweils gegenüberliegenden der Vorsprünge hin von radial außen nach radial innen zunimmt. Diese Nasen haben mithin einen schräg nach innen zum Ringumfang hin abfallenden Nasenrücken, der das Einlegen des Schellenbands zwischen den Vorsprüngen aufgrund seiner Schräge erleichtert.

Die Erfindung und ihre Weiterbildungen werden nachstehend anhand der beiliegenden Zeichnungen eines bevorzugten Ausführungsbeispiels näher beschrieben. Darin stellen dar:
- Fig. 1: ein Ausführungsbeispiel einer erfindungsgemäßen Verbindung zwischen einem Endabschnitt eines Schlauches und einer Schelle mittels eines gummielastischen Ringes,
- Fig. 2: eine Vorderansicht der Verbindung nach Fig. 1,
- Fig. 3: eine Seitenansicht der Verbindung nach Fig. 1 und
- Fig. 4: die entgegengesetzte Seitenansicht der Verbindung nach Fig. 1,
- Fig. 5: eine Seitenansicht eines bei der erfindungsgemäßen Verbindung verwendeten gummielastischen Ringes,
- Fig. 6: den Schnitt VI-VI der Fig. 5,
- Fig. 7: den Schnitt VII-VII der Fig. 5 und
- Fig. 8: einen vergrößerten Ausschnitt der Fig. 7.

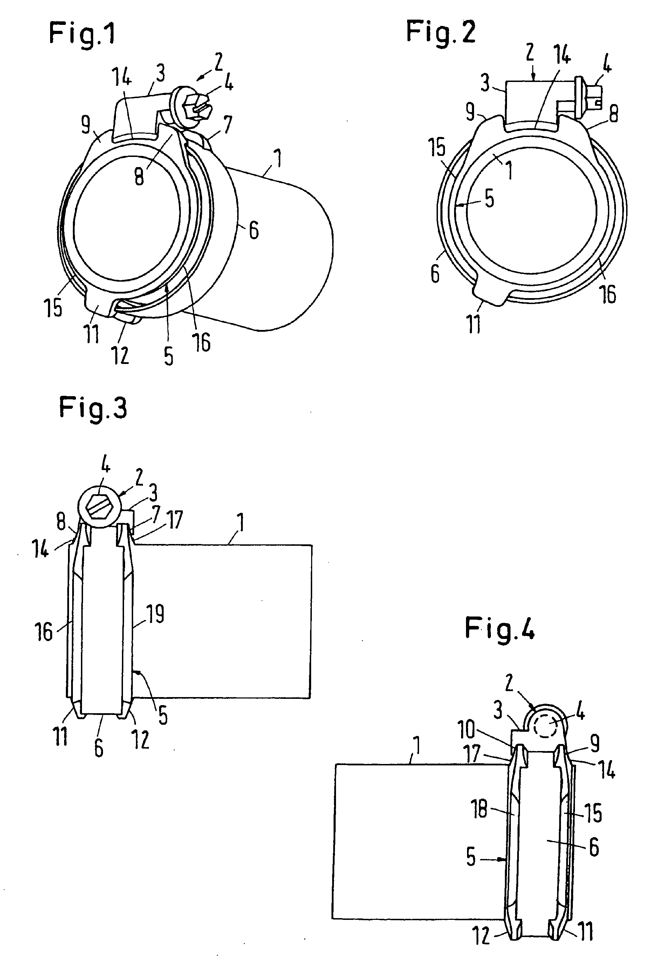

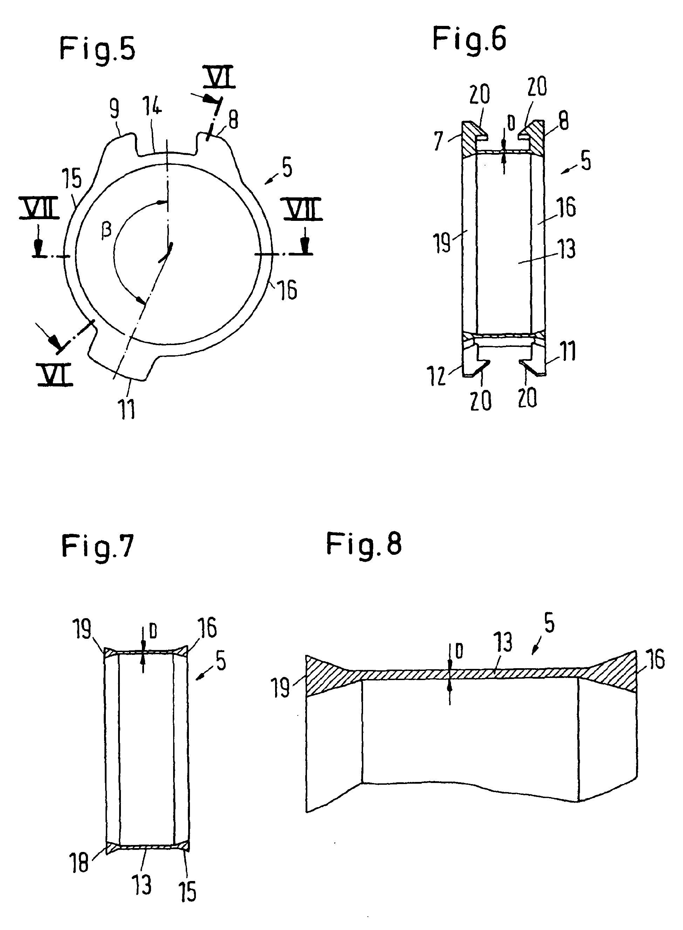

Die in den Fig. 1 bis 4 dargestellte Verbindung eines Schlauches 1, von dem nur ein kurzer Endabschnitt dargestellt ist, mit einer Schelle, hier einer Schneckengewindeschelle, deren Verschluß 2 aus einem Gehäuse 3 und einer Spannschraube 4 nur schematisch dargestellt ist, weist einen gummielastischen Ring 5 auf, der in den Fig. 5 bis 8 einzeln dargestellt ist und den Schlauch 1 unter elastischer Vorspannung lösbar umgibt.

Der Schlauch 1 weist Gummi und gegebenenfalls auch eine Gewebeeinlage auf. Er kann aber auch nur aus biegsamem und nachgiebigem thermoplastischem Kunststoff bestehen. Auch der Ring 5 kann aus Gummi oder Kunststoff bestehen.

Das Schellenband 6 der Schelle, das auf seiner Außenseite mit (nicht dargestellten) rippenartigen Gewindeabschnitten für den Eingriff des Gewindes der Spannschraube 4 versehen ist und deren Enden sich innerhalb des Gehäuses 2 überlappen, ist zwischen radialen, etwa hakenförmigen Vorsprüngen 7-12 arretiert. Die Vorsprünge 7-12 sind an den Rändern des Ringes 5 angeformt. Der Ring 5 ist lösbar um den Schlauch 1 herum unterhalb des Schellenbandes 6 unter elastischer Vorspannung befestigt. Die Dicke D des Ringes 5 beträgt in seinem axial zwischen den Vorsprüngen 7, 10, 12 einerseits und den Vorsprüngen 8, 9, 11 andererseits liegenden Bereich 13 (Fig. 5 bis 8) etwa 5 % bis 9 % der Wandstärke des (unbelasteten) Schlauches 1, hier etwa 6 % bis etwa 8 % bei einer Dicke D von etwa 0,3 mm bis etwa 0,4 mm und einer Wandstärke des Schlauches 1 von etwa 5 mm.

Vor und hinter dem Verschluß 2 der Schelle sind jeweils zwei hakenförmige Vorsprünge 7, 8 und 9, 10, sich paarweise gegenüberliegend, an den Rändern des Ringes 5 angeformt. Diese hakenförmigen Vorsprünge 7-10 übergreifen die Ränder des Schellenbands 6. Ferner sind zwei weitere, sich gegenüberliegende, hakenförmige Vorsprünge 11 und 12 als drittes Vorsprungpaar jeweils an einem der Ränder des Ringes 5 angeformt. Auch diese Vorsprünge 11, 12 übergreifen jeweils einen der Ränder des Schellenbands 6. Sie haben ferner von der Mitte der beiden vor und hinter dem Verschluß 2 an diesem anliegenden Vorsprungpaare 7, 8 und 9, 11 in beiden Umfangsrichtungen der Schelle jeweils bis zur Mitte des dritten Vorsprungpaares 11, 12 einen Winkelabstand β von mehr als 90°. In der einen Umfangsrichtung der Schelle bis jeweils zur Mitte des dritten Vorsprungpaares 11, 12 liegt der Winkelabstand zwischen 140° und 170°, hier bei etwa 155°.

Der gummielastische Ring 5 hat an seinen Rändern in Umfangsrichtung zwischen den Vorsprüngen 10-12 umlaufende Wülste 14-19, deren Querschnitt radial außen jeweils in entgegengesetzten Axialrichtungen des Ringes 5 nach außen und radial nach außen zunimmt. Ferner nimmt der Querschnitt der Wülste 14-19 radial innen in entgegengesetzten Axialrichtungen des Ringes 5 nach außen und radial nach innen zu.

Sodann übergreifen die Vorsprünge 7-12 die Schellenbandränder mit Nasen 20, deren Querschnitt zu den ihnen gegenüberliegenden Vorsprüngen 7-12 hin von radial außen nach radial innen zunimmt.

Die lösbare Ausbildung von Schlauch 1 und Ring 5 hat den Vorteil, daß sie separat hergestellt werden können. Für Schläuche unterschiedlicher Länge, aber gleichem Durchmesser und gleicher Wandstärke ist nur ein Formwerkzeug erforderlich. Zunächst kann ein relativ langer Schlauch 1 hergestellt werden, von dem dann unterschiedlich lange Schläuche abgeschnitten werden können. Für alle Schläuche kommt man mit gleichen gummielastischen Ringen 5 aus, für die ebenfalls nur ein Formwerkzeug erforderlich ist. Da der Ring 5 im Vergleich zur Wandstärke des Schlauches relativ dünn ist, beeinflußt er nicht nur das Gesamtverhalten von Schlauch 1 und Ring 5 kaum, sondern er läßt sich auch leicht auf dem Schlauch aufbringen und zusammen mit dem Schlauch und der ungespannten vormontierten Schelle auf einem Rohrstutzen über eine Halterippe des Stutzens hinweg aufschieben.

Die beiden Vorsprungpaare 7, 8 und 9, 10 verhindern eine Verschiebung des Verschlusses 2 bei und vor dem Spannen der Schelle.

Das zusätzliche Vorsprungpaar 11, 12 verhindert eine Schrägstellung des Schellenbands 6 beim Spannen, wenn der Verschluß beim Spannen in Axialrichtung mit der Hand festgehalten und dabei oder mittels eines Schraubendrehers in Axialrichtung der Schelle belastet wird, mittels des Schraubendrehers z.B. durch eine Axialkomponente der durch den Schraubendreher beim Festziehen der Spannschraube 4 auf diese ausgeübten Druckkraft, wenn der Schraubendreher versehentlich schräg angesetzt wird.

Der Winkelabstand β zwischen der Mitte der ersten beiden Vorsprungpaare 7, 8 und 9, 10 einerseits sowie dem dritten Vorsprungpaar 11, 12 andererseits, so daß das dritte Vorsprungpaar 11, 12 nicht genau diametral zu den ersten beiden Vorsprungpaaren angeordnet ist, läßt hinreichend Platz für die Anordnung einer Feder zwischen Schelle und Ring 5 in dem Umfangsbereich des Ringes 5 im Uhrzeigersinn zwischen dem Vorsprungpaar 7, 8 und dem Vorsprungpaar 11, 12, um eine thermisch und druckbedingte Dickenänderung der Wandstärke des Schlauches 1 auszugleichen. Eine derartige Feder ist beispielsweise aus der DE 41 27 017 Cl bekannt. Die etwa dreieckige Querschnittsform der Wülste 14-19 an den Rändern der Außen- und Innenseite des Ringes 5 zwischen den Vorsprüngen 7-12 erfordert wenig Material. Sie werden nicht direkt durch die Schelle unter Druck gesetzt und behalten daher ihre Form weitgehend unabhängig vom Einspanndruck der Schelle bei. Gleichzeitig verhindern sie zusätzlich zu den hakenförmigen Vorsprüngen 7-12 eine Axialverschiebung der Schelle auf dem Ring 5.

Die nach innen in Bezug auf den Ring 5 vorstehenden Teile der Wülste 14-19 bewirken beim Spannen der Schelle, daß sich die beiden hakenförmigen Vorsprünge jedes Vorsprungpaares zueinander hin neigen, wie es aus den Fig. 3 und 4 ersichtlich ist, so daß sie das Schellenband 6 um so fester übergreifen.

Die Nasen 20 der Vorsprünge 7-12 haben einen schräg nach innen zum Ringumfang hin abfallenden Nasenrücken, der das Einlegen des Schellenbands 6 zwischen den Vorsprüngen 7-12 aufgrund seiner Schräge erleichtert.

Der Ring 5 ist prinzipiell auch zur Vormontierung anderer Schellen, z.B. Federbandschellen oder solcher mit Spannbacken und Spannschraube, geeignet.

## Patentansprüche

1. Verbindung einer Schelle mit einem Schlauch (1), bei der ein Schellenband (6) der Schelle zwischen radialen, hakenförmigen Vorsprüngen (7-12) arretiert ist, die mit dem Schlauch (1) in Verbindung stehen und die Ränder des Schellenbands (6) übergreifen, **dadurch gekennzeichnet, daß** die Vorsprünge (7-12) an den Rändern eines gummielastischen Ringes (5) ausgebildet sind, der den Schlauch (1) unterhalb des Schellenbandes (6) unter elastischer Vorspannung lösbar umgibt, und daß die Dicke (D) des Ringes (5) in seinem axial zwischen den Vorsprüngen (7-12) liegenden Bereich 5 % bis 9 % der Wandstärke des Schlauches (1) beträgt.

2. Verbindung nach Anspruch 1, **dadurch gekennzeichnet, daß** die Schelle einen Verschluß (2) zum Spannen des Schellenbands (6) aufweist und vor und hinter dem Verschluß (2) jeweils zwei sich gegenüberliegende hakenförmige Vorsprünge (7-10) an den Rändern des Ringes (5) angeformt sind, die die Ränder des Schellenbands (6) übergreifen.

3. Verbindung nach Anspruch 2, **dadurch gekennzeichnet, daß** zwei weitere, sich gegenüberliegende hakenförmige Vorsprünge (11, 12) jeweils an einem der Ränder des Ringes (5) angeformt sind, die die Ränder des Schellenbands (6) übergreifen und von der Mitte der beiden vor und hinter dem Verschluß (2) liegenden Vorsprungpaare (7, 8; 9, 10) in beiden Umfangsrichtungen der Schelle jeweils bis zur Mitte des dritten Vorsprungpaares (11, 12) einen Winkelabstand (β) von mehr als 90° aufweisen.

4. Verbindung nach Anspruch 3, **dadurch gekennzeichnet, daß** der Winkelabstand (β) in der einen Umfangsrichtung der Schelle zwischen 140° und 170° liegt.

5. Verbindung nach einem der Ansprüche 1 bis 4, **dadurch gekennzeichnet, daß** der Ring (5) an jedem Rand zwischen den Vorsprüngen (7-12) umlaufende Wülste (14-19) aufweist, deren Querschnitt radial außen jeweils in entgegengesetzten Axialrichtungen des Ringes (5) nach außen und radial nach außen zunimmt.

6. Verbindung nach Anspruch 5, **dadurch gekennzeichnet, daß** der Querschnitt der Wülste (14-19) radial innen jeweils in entgegengesetzten Axialrichtungen des Ringes (5) nach außen und radial nach innen zunimmt.

7. Verbindung nach einem der Ansprüche 1 bis 6, **dadurch gekennzeichnet, daß** die Vorsprünge (7-12) die Schellenbandränder mit Nasen (20) übergreifen, deren Querschnitt zu dem jeweils gegenüberliegenden der Vorsprünge (7-12) hin von radial außen nach radial innen zunimmt.

## Claims

1. Connection of a clamp to a hose (1), in which a clamp band (6) of the clamp is detained between radial, hook-shaped projections (7-12) which are connected to the hose (1) and grip over the edges of the clamp band (6), **characterized in that** the projections (7-12) are configured on the edges of an elastomeric ring (5) which, under elastic pretension, detachably surrounds the hose (1) beneath the clamp band (6), and **in that** the thickness (D) of the ring (5), in its region lying axially between the projections (7-12), amounts to 5% to 9% of the wall thickness of the hose (1).

2. Connection according to Claim 1, **characterized in that** the clamp has a fastening (2) for the tensioning of the clamp band (6) and, in front of and behind the fastening (2), two mutually opposing, hook-shaped projections (7-10) are respectively formed onto the edges of the ring (5), which projections grip over the edges of the clamp band (6).

3. Connection according to Claim 2, **characterized in that** two further mutually opposing, hook-shaped projections (11-12) are respectively formed onto one of the edges of the ring (5), which projections grip over the edges of the clamp band (6) and have from the middle of the two pairs of projections (7, 8; 9, 10) lying in front of and behind the fastening (2), in both peripheral directions of the clamp respectively up to the middle of the third pair of projections (11, 12), an angular distance (β) of more than 90°.

4. Connection according to Claim 3, **characterized in that** the angular distance (β) in one peripheral direction of the clamp lies between 140° and 170°.

5. Connection according to one of Claims 1 to 4, **characterized in that** the ring (5) has on each edge between the projections (7-12) circumferential beads (14-19), the cross section of which on the radial outside increases, respectively in opposite axial directions of the ring (5), outwards and radially outwards.

6. Connection according to Claim 5, **characterized in that** the cross section of the beads (14-19) on the radial inside increases, respectively in opposite axial directions of the ring (5), outwards and radially inwards.

7. Connection according to one of Claims 1 to 6, **characterized in that** the projections (7-12) grip over the clamp band edges with noses (20), the cross section of which increases, towards the respectively opposite projection of the projections (7-12), from outside to inside in the radial direction.

## Revendications

1. Raccordement d'un collier avec un tuyau (1), dans lequel une bande de collier (6) du collier est bloquée entre des saillies radiales en forme de crochet (7-12) qui sont en liaison avec le tuyau (1) et qui viennent en prise par le dessus avec les bords de la bande de collier (6), **caractérisé en ce que** les saillies (7-12) sont réalisées au niveau des bords d'une bague en caoutchouc élastomère (5), qui entoure le tuyau (1) de manière desserrable en dessous de la bande de collier (6) avec précontrainte élastique et **en ce que** l'épaisseur (D) de la bague (5) dans sa partie située axialement entre les saillies (7-12) vaut 5% à 9% de l'épaisseur de paroi du tuyau (1).

2. Raccordement selon la revendication 1, **caractérisé en ce que** le collier présente une fermeture (2) pour serrer la bande de collier (6) et **en ce que** devant et derrière la fermeture (2) sont formées à chaque fois deux saillies (7-10) opposées en forme de crochet au niveau des bords de la bague (5), lesquelles viennent en prise par le dessus avec les bords de la bande de collier (6).

3. Raccordement selon la revendication 2, **caractérisé en ce que** deux autres saillies (11, 12) opposées en forme de crochet sont formées à chaque fois sur l'un des bords de la bague (5), lesquelles viennent en prise par le dessus avec les bords de la bande de collier (6) et présentent une distance angulaire (β) de plus de 90° depuis le milieu des deux paires de saillies (7, 8 ; 9, 10) situées devant et derrière la fermeture (2) dans les deux sens périphériques du collier, à chaque fois jusqu'au milieu de la troisième paire de saillies (11, 12).

4. Raccordement selon la revendication 3, **caractérisé en ce que** la distance angulaire (β) dans l'un des sens périphériques du collier est comprise entre 140° et 170°.

5. Raccordement selon l'une quelconque des revendications 1 à 4, **caractérisé en ce que** la bague (5) présente au niveau de chaque bord entre les saillies (7-12) des bourrelets périphériques (14-19) dont la section transversale augmente radialement à l'extérieur à chaque fois dans des sens axiaux opposés de la bague (5) vers l'extérieur et radialement vers l'extérieur.

6. Raccordement selon la revendication 5, **caractérisé en ce que** la section transversale des bourrelets (14-19) augmente radialement à l'intérieur à chaque fois dans des sens axiaux opposés de la bague (5) vers l'extérieur et radialement vers l'intérieur.

7. Raccordement selon l'une quelconque des revendications 1 à 6, **caractérisé en ce que** les saillies (7-12) viennent en prise par le dessus avec les bords de la bande de collier au moyen d'ergots (20) dont la section transversale augmente radialement depuis l'extérieur jusqu'à radialement vers l'intérieur vers la section transversale opposée des saillies (7-12).
